# EUROPÄISCHE PATENTANMELDUNG

(11) **EP 1 878 964 A2**
(43) Veröffentlichungstag der Anmeldung: **16.01.2008**
(21) Anmeldenummer: 07009823.1
(22) Anmeldetag: 16.05.2007
(51) Int. Cl.: F16M 11/42

(54) **Kamerawagen mit lenkbaren Vorder-und /oder Hinterrädern**

(30) Priorität: 14.07.2006 DE 102006032723; 04.08.2006 DE 102006036596
(71) Anmelder: Movie Tech AG, 81829 München (DE)
(72) Erfinder: Flosbach, Gunnar, 85656 Buch am Buchrain (DE)
(74) Vertreter: Popp, Eugen

(57) **Zusammenfassung**

Kamerawagen (10) mit einem Vorder(11)- und Hinter(12)-Räder umfassenden Fahrgestell, wobei die Vorder- und Hinterräder jeweils lenkbar gelagert und mit einem Lenk-Antrieb (13, 14) gekoppelt sind, derart, daß wenigstens die Vorder- oder Hinterräder lenkbar sind. Den lenkbaren Vorder(11)- und/oder Hinter(12)-Rädern ist jeweils ein gesonderter Lenk-antrieb (13, 14), insbesondere elektromotorischer Lenkantrieb zugeordnet, die derart individuell ansteuerbar sind, daß der Kamerawagen (10) mit einer Untersteuerung, Übersteuerung oder neutralen Steuerung verfahrbar ist.

## Beschreibung

Die vorliegende Erfindung betrifft einen Kamerawagen mit einem Vorder- und Hinterräder umfassenden Fahrgestell, wobei die Vorder- und Hinterräder jeweils lenkbar gelagert und mit einem Lenkantrieb gekoppelt sind, derart, daß wenigstens die Vorder- oder Hinterräder lenkbar sind.

Derartige Kamerawagen sind allgemein bekannt. Insbesondere sind auch Kamerawagen mit drei verschiedenen Lenkmodi bekannt, wobei man unterscheidet zwischen
- nur Vorderräder konventionell, d.h. paarweise nach links oder rechts lenkbar;
- nur Hinterräder konventionell, d.h. paarweise nach links oder rechts lenkbar;
- alle Räder, d.h. die Vorder- und Hinterräder gemeinsam lenkbar, entweder die Vorder- und Hinterräder jeweils nach links oder rechts (crab-Modus) oder die Vorder- und Hinterräder jeweils entgegengesetzt nach links oder rechts (round-Modus).
Es wird diesbezüglich nur beispielhaft auf die DE 10 2004 039 571 A1 verwiesen.

Mit den bekannten Konstruktionen ist es in der Regel nur möglich, den Kamerawagen je nach Lenkeinschlag längs eines vorgegebenen Kreisbogens zu verfahren, wobei die herkömmlich verwendeten mechanischen Lenkgetriebe den Nachteil haben, daß der Lenkeinschlag der einzelnen Räder nicht optimal aufeinander abgestimmt ist derart, daß bei angestrebter neutraler Steuerung die Radachsen der gelenkten Vorder- oder Hinterräder sich auf der gemeinsamen Querachse der Hinter- bzw. Vorderräder schneiden. Die Folge davon ist, daß die Kurve des Kamerawagens vom Lenkeinschlag entweder nur des äußeren oder des inneren Vorder- oder Hinterrades bestimmt ist. Das jeweils andere gelenkte Rad wird dann mit Schlupf über den Boden bewegt. Auch ist beim Stand der Technik keine gezielte Über- oder Untersteuerung möglich.

Wenn alle vier Räder des Kamerawagens lenkbar sind, sollten sich idealerweise die Radachsen aller Räder in einem Punkt treffen, der vorzugsweise auf Höhe der Kameraufnahme bezüglich der Kamerawagenlängsachse liegt. Im Extremfall soll es beim Lenkmodus "round" möglich sein, dass die Kamera sich um sich selbst dreht. Mit mechanischen Lenkgetrieben sind auch diese Voraussetzungen nur sehr unzureichend erfüllbar.

Der vorliegenden Erfindung liegt die Aufgabe zugrunde, Abhilfe für den vorgenannten Nachteil der bekannten Konstruktionen zu schaffen.

Diese Aufgabe wird erfindungsgemäß durch die kennzeichnenden Merkmale des Anspruches 1 gelöst, wobei bevorzugte Weiterbildungen und Ausführungsformen in den Unteransprüchen beschrieben sind.

Ein wesentlicher Punkt der vorliegenden Erfindung liegt also darin, daß wenigstens zwei Lenkantriebe für die Lenkung der Vorder- und/oder Hinterräder vorgesehen sind, wobei es sich vorzugsweise um elektromotorische Lenkantriebe handelt. Bei einer Ausführungsform sollen diese Lenkantriebe derart individuell ansteuerbar sein, daß der Kamerawagen entweder mit einer
- Untersteuerung,
- Übersteuerung, oder
- neutralen Steuerung
verfahrbar ist. Auf diese Art und Weise ist es möglich, bei vorgegebenem Lenkeinschlag den Radius der bogenförmigen Verfahrstrecke stetig entweder zu verkleinern (Übersteuerung), oder zu vergrößern (Untersteuerung), oder konstant zu halten (neutrale Steuerung). Wichtig ist dabei, daß dabei der Lenkeinschlag nicht verändert werden muß, so daß der Kamerawagen durch Lenkeinschläge unbeeinflußt bleibt und sich dementsprechend ruhiger auf einem Bühnenboden oder dem Boden eines Filmstudios verfahren läßt.

Die lenkbaren Vorder- oder Hinterräder, sofern jeweils nur diese lenkbar sind, lassen sich durch die jedem Vorder- oder Hinterrad zugeordneten Lenkantriebe so ansteuern, dass der Schnittpunkt der Radachsen der lenkbaren Räder bei jedem beliebigen Lenkeinschlag auf der gemeinsamen Querachse der ungelenkten Räder liegt. Nur ein solcher Lenkeinschlag ermöglicht eine optimale Kreisfahrt. Mechanische Getriebe haben hier den Nachteil, bei unterschiedlichen Lenkwinkeln verschiedene Fehler aufzuweisen. Die erfindungsgemäße Variante hat den Vorteil, immer die geometrischen Bedingungen zu erfüllen.

In an sich bekannter Weise können die Lenkantriebe jeweils über Ketten, Riemen, Zahnräder od. dgl. Kraftübertragungsmittel getrieblich mit den Lenkachsen der Vorder-und/oder Hinterräder verbunden sein.

Vorzugsweise sind alle vier Räder durch entweder zwei jeweils zwischen Vorder- und Hinterrad wirksame, oder durch jedem Rad einzeln zugeordnete Lenkantriebe lenkbar derart, daß je nach Bedarf vier unterschiedliche Lenkmodi einstellbar sind, nämlich
- Lenkung nur der Vorderräder (conventional front),
- Lenkung nur der Hinterräder (conventional rear), oder
- Lenkung aller vier Räder gemeinsam, entweder
   a) gleichgerichtet (crab), oder
   b) Vorder- und Hinterräder entgegengerichtet (round).

Bei vier lenkbaren Laufrädern treffen sich im sog. "round-Modus" die Achsen aller vier Räder in einem Punkt. Bei bestehenden Systemen ist man bemüht, diesen Drehpunkt auf Höhe der Kameraaufnahme bezüglich der Kamerawagenlängsachse zu legen. Damit nähert sich der Kurvenmittelpunkt bei größerem Lenkeinschlag immer mehr der Kamera, bis sich die Kamera im Extremfall auf einem Punkt um sich selbst dreht. Das System mit zwei Motoren würde entsprechend ausgelegt werden. Hier ist man frei bei der Gestaltung des Kameraaufnahmepunkts. Wesentlich ist auch noch, dass es möglich ist, den Kreismittelpunkt entlang der Kamerawagenlängsachse zu verschieben.

Eine besondere Ausführungsform eines erfindungsgemäß ausgebildeten Kamerawagens ist dadurch gekennzeichnet, daß bei nur zwei Lenkantrieben, nämlich jeweils einem Lenkantrieb an jeder Fahrgestellseite, zwischen diesen einerseits und den jeweils zugeordneten Vorder- und/oder Hinterrädern andererseits eine Schalteinrichtung vorgesehen ist, mittels der
a) eine individuelle Zuschaltung von Vorder- und Hinterrad,
b) ein Lenkausschlag von Vorder- und Hinterrad in dieselbe Richtung, oder
c) ein Lenkausschlag von Vorder- und Hinterrad in entgegengesetzte Richtung einstellbar ist.

Damit können die vier vorgenannten Modi erreicht werden.

Die Lenkantriebe müssen natürlich angesteuert werden, und zwar durch eine Lenkeinheit, die ein Lenkrad oder eine Lenkstange umfaßt. Die Verbindung zwischen dieser Lenkeinheit und den Lenkantrieben kann elektrisch, und zwar mittels elektrischem Draht, oder auch drahtlos sein.

Insbesondere umfaßt die Lenkeinheit ein Dreh-Potentiometer, mittels dem mechanische Lenkausschläge der Lenkstange bzw. des Lenkrades in entsprechende elektrische Signale wandelbar sind. Diese elektrischen Signale dienen dann zur Ansteuerung der Lenkantriebe, wobei dazwischen noch eine Steuereinheit eingefügt sein kann, um die erfindungsgemäße Unter-, Über- oder neutrale Steuerung einstellen zu können.

Nachstehend werden vier Ausführungsformen eines erfindungsgemäß ausgebildeten Kamerawagens anhand der beigefügten Zeichnung näher beschrieben. Diese zeigt in:
- Fig. 1: eine erste Ausführungsform eines Kamerawagens mit Lenkung nur der Hinterräder in schematischer Draufsicht;
- Fig. 2: eine zweite Ausführungsform eines Kamerawagens mit Lenkung nur der Vorderräder in schematischer Draufsicht;
- Fig. 3: eine dritte Ausführungsform eines Kamerawagens mit Lenkung sowohl der Vorder- als auch Hinterräder in schematischer Draufsicht;
- Fig. 4: eine vierte Ausführungsform eines Kamerawagens mit Lenkung aller vier Räder, wobei die Lenkung der Hinterräder entgegengesetzt ist zur Lenkung der Vorderräder, ebenfalls in schematischer Draufsicht; und
- Fig. 5 u. 6: eine fünfte Ausführungsform eines Kamerawagens mit jedem Laufrad gesondert zugeordneten Antrieben, jeweils in schematischer Draufsicht.

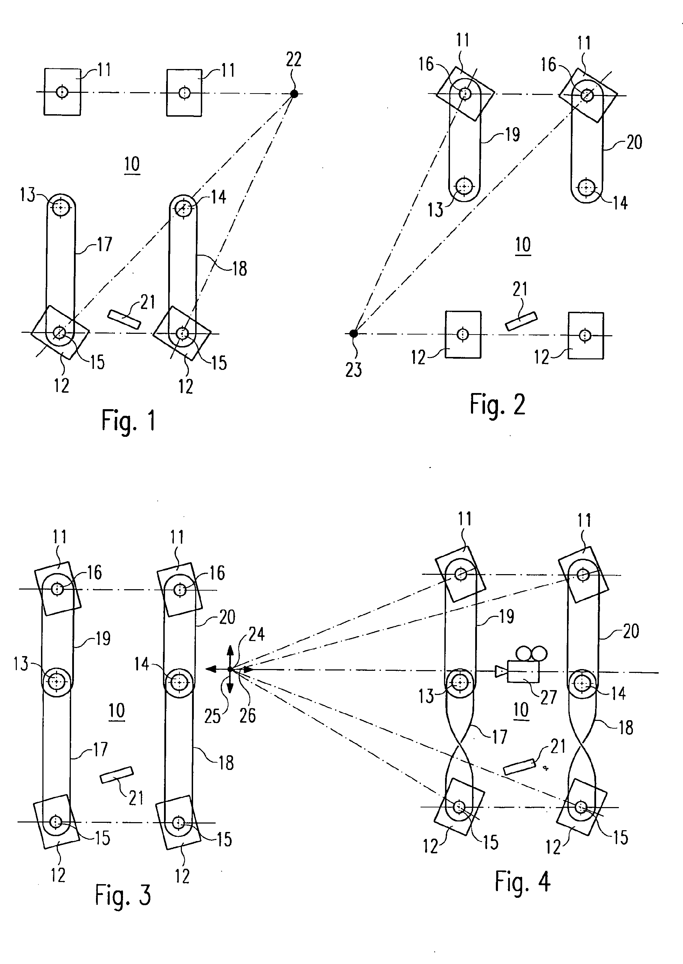

Vorab sei erwähnt, daß die Fig. 1 bis 4 im wesentlichen nur die vier Laufräder eines Kamerawagens mit den jeweils zugeordneten Antrieben und vier verschiedenen Lenkmodi zeigen. Die restlichen Elemente eines Kamerawagens sind an sich bekannt und sind zum besseren Verständnis der vorliegenden Erfindung nicht dargestellt. Auch hier wird ergänzend beispielhaft auf die DE 10 2004 039 571 A1 verwiesen.

In allen vier Figuren ist der Kamerawagen mit der Bezugsziffer 10 angedeutet. Die Vorderräder haben die Bezugsziffer 11 und die Hinterräder die Bezugsziffer 12. Bei allen vier Ausführungsformen sind jeweils nur zwei Lenkantriebe 13, 14 vorgesehen, wobei es sich jeweils um elektromotorische Lenkantriebe handelt. Diese Lenkantriebe 13, 14 sind individuell ansteuerbar, und zwar derart, daß der Kamerawagen 10 entweder mit einer Untersteuerung, Übersteuerung oder neutralen Steuerung verfahrbar ist. Ein neutrales Lenkverhalten ist dadurch gekennzeichnet, daß der Kamerawagen sich auf einer Linie bewegt, die dem Kurvenradius entspricht. Untersteuert der Kamerawagen, so strebt dieser trotz eingelenkter Vorderräder dem äußeren Kurvenrand zu. Bei Übersteuerung zieht der Kamerawagen zum inneren Kurvenrand. In Fig. 1 sind nur die Hinterräder um aufrechte Lenkachsen 15 lenkbar, wobei der Lenkeinschlag der beiden Hinterräder unterschiedlich groß ist, um ein neutrales Lenkverhalten zu erreichen.

Ähnlich ist es bei der Ausführungsform nach Fig. 2, nur daß dort die Vorderräder um zugeordnete Lenkachsen 16 verschwenkbar bzw. lenkbar sind.

Fig. 1 entspricht also dem Lenkmodus: nur Hinterräder konventionell, d.h. paarweise nach links oder rechts lenkbar, jedoch bei Bedarf mit unterschiedlichem Lenkeinschlag.

Fig. 2 zeigt die Ausführungsform, bei der nur die Vorderräder konventionell, d.h. paarweise nach links oder rechts lenkbar sind, und bei Bedarf ebenfalls mit unterschiedlichem Lenkeinschlag.

Die elektromotorischen Lenkantriebe 13, 14 erlauben insbesondere eine Ansteuerung der Lenkachsen 15 oder 16 so, daß die Radachsen der gelenkten Räder 12 bzw. 11 sich jeweils auf der gemeinsamen Drehachse der ungelenkten Räder schneiden. Dann ist eine exakt neutrale Steuerung und Kurvenfahrt längs eines exakten Kreisbogens gewährleistet. Der Schnittpunkt der lenkbaren Räder ist in den Fig. 1 und 2 mit den Bezugsziffern 22 und 23 gekennzeichnet.

Die getriebliche Verbindung zwischen den Lenkantrieben 13, 14 und den zugeordneten Lenkachsen 15, 16 erfolgt jeweils durch Endlosketten 17, 18 bzw. 19, 20. Statt Ketten sind auch Zahnriemen od. dgl. denkbar, wobei Zahnriemen besonders geräuscharm sind.

Bei der Ausführungsform nach Fig. 3 sind alle vier Räder 11, 12 lenkbar, wobei die beiden zwischen Vorder- und Hinterrad jeder Fahrgestellseite angeordneten Lenkantriebe 13, 14 mit den Lenkachsen 16 der Vorderräder 11 über Endlosketten 19, 20, und mit den den Hinterrädern 12 zugeordneten Lenkachsen 15 über Endlosketten 17, 18 getrieblich verbunden sind. Die getriebliche Verbindung ist dabei so, daß die Vorder- und Hinterräder jeweils gleichgerichtet auslenkbar sind. Es handelt sich dabei um den Lenkmodus "crab".

Durch Umschaltung der Antriebsrichtung z.B. der den hinteren Lenkachsen 15 zugeordneten Endlosketten 17, 18 entsprechend Fig. 4 ist es möglich, daß die vorderen Räder 11 nach links und die hinteren Räder 12 nach rechts bzw. umgekehrt eingeschlagen werden können. Bei diesem Modus spricht man vom sogenannten round-Modus, so wie dies in Fig. 4 schematisch dargestellt ist. Die erwähnte Schalteinrichtung, die zwischen den Lenkantrieben einerseits und den zugeordneten Kraftübertragungsmitteln, nämlich Endlosketten 17, 18 andererseits angeordnet ist, kann sehr einfach z.B. als Linear-Schalteinrichtung ausgebildet sein. Es ist dann ein Wechsel vom crab-Modus gemäß Fig. 3 auf den round-Modus gemäß Fig. 4 und umgekehrt möglich.

Noch mehr Freiheitsgrade können dann erreicht werden, wenn jedem Rad des Kamerawagens ein gesonderter Lenkantrieb zugeordnet ist, wobei diese Lenkantriebe dann auch jeweils individuell ansteuerbar sein sollen.

Die Lenkantriebe sind - wie bereits eingangs erwähnt - entweder über elektrische Drähte oder drahtlos mit einer Lenkeinheit, die ein Lenkrad oder eine Lenkstange umfaßt, verbunden. In den Fig. 1 bis 4 ist die erwähnte Lenkstange mit der Bezugsziffer 21 angedeutet.

Schließlich sei an dieser Stelle ebenfalls nochmals erwähnt, daß die Lenkeinheit, d.h. die Lenkstange 21 mit einem Dreh-Potentiometer in Verbindung steht, mittels dem mechanische Lenkausschläge der Lenkstange in entsprechende elektrische Signale für die Lenkantriebe 13, 14 wandelbar ist.

Zu der Ausführungsform nach Fig. 4 sei noch erwähnt, dass die Lenkantriebe vorzugsweise so angesteuert werden, dass die Drehachsen aller vier Räder sich in einem Punkt 24 schneiden, wobei dieser Punkt relativ zur Kamerawagenlängsachse einstellbar ist (s. Doppelpfeile 25, 26). Vorzugsweise erfolgt die Einstellung des Schnittpunktes 24 etwa auf Höhe der Kamera, die in Fig. 4 mit der Bezugsziffer 27 angedeutet ist. Der Schnittpunkt 24 entspricht natürlich dem Mittelpunkt der Kreisbahn, längs der der Kamerawagen 10 beim Modus "round" verfahrbar ist.

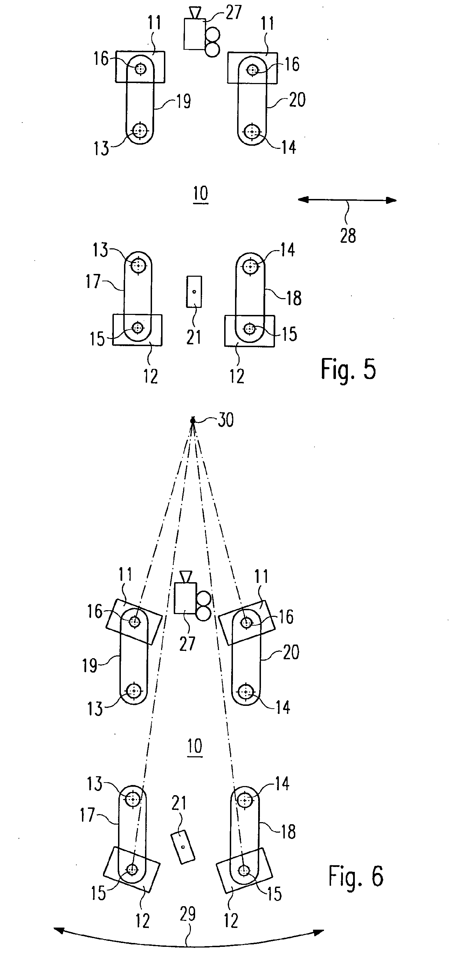

Es sei noch erwähnt, daß dann, wenn man bei konventionellen Kamerawagen das Gerät seitlich stellt, nur noch der sog. "crab-Modus" als Lenkvariante bleibt. Bei Lenkung mit vier Antrieben ist es möglich, die "Längsachse", welche die oben erwähnte Ausrichtungsachse für die "konventionelle" Lenkung und "round"-Lenkung darstellt, um 90° zu drehen. Dies hat den Vorteil, daß man die Kamera 27 sehr tief montieren, insbesondere auch vor dem Kamerawagen 10 unmittelbar über dem Boden, und zur Seite hin filmen kann, und sämtliche Lenkfunktionen zur Verfügung hat. Diese Variante ist in den Fig. 5 und 6 dargestellt. Dort ist jedem Laufrad 11, 12 über Antriebsketten oder -riemen 17, 18 bzw. 19, 20 ein gesonderter Antrieb, insbesondere elektromotorischer Antrieb 13, 14 zugeordnet. In Fig. 5 sind die Antriebe 13, 14 so angesteuert, daß alle vier Laufräder quer zur Kamerawagenlängsachse stehen, so daß der Kamerawagen 10 quer verfahrbar ist (Pfeil 28). Auch ist ein "round"-Lenkmodus entsprechend Fig. 6 möglich, wo sich die vier Laufradachsen in einem Punkt 30 vor oder hinter dem Kamerawagen 10, insbesondere auf dessen Längsmittenachse treffen. Um diesen ist dann der Kamerawagen hin- und herverfahrbar entsprechend Pfeil 29. Im Gegensatz zu dem "round"-Modus gemäß Fig. 4 sind bei dem Modus gemäß Fig. 6 sowohl die vorderen als auch die hinteren Laufräder jeweils in entgegengesetzter Richtung eingeschlagen, und zwar gleichermaßen, jedoch unterschiedlich stark, also nicht wie in Fig. 4 jeweils paarweise nach links oder rechts.

Sämtliche in den Anmeldungsunterlagen offenbarten Merkmale werden als erfindungswesentlich beansprucht, soweit sie einzeln oder in Kombination gegenüber dem Stand der Technik neu sind.

### Bezugszeichen

- 10: Kamerawagen
- 11: Vorderräder
- 12: Hinterräder
- 13: Lenkantrieb
- 14: Lenkantrieb
- 15: Lenkachse
- 16: Lenkachse
- 17: Endloskette
- 18: Endloskette
- 19: Endloskette
- 20: Endloskette
- 21: Lenkstange
- 22: Radachsenschnittpunkt
- 23: Radachsenschnittpunkt
- 24: Radachsenschnittpunkt
- 25: Doppelpfeil
- 26: Doppelpfeil
- 27: Kamera
- 28: Pfeil
- 29: Pfeil
- 30: Radachsenschnittpunkt

## Patentansprüche

1. Kamerawagen (10) mit einem Vorder(11)- und Hinter(12)-Räder umfassenden Fahrgestell, wobei die Vorder- und Hinterräder jeweils lenkbar gelagert und mit einem Lenk-Antrieb (13, 14) gekoppelt sind, derart, daß wenigstens die Vorder(11)- oder Hinter(12)-Räder lenkbar sind,
**dadurch gekennzeichnet, daß**
den lenkbaren Vorder(11)- oder Hinter(12)-Rädern jeweils ein gesonderter Lenkantrieb (13, 14), insbesondere elektromotorischer Lenkantrieb zugeordnet ist, die derart individuell ansteuerbar sind, daß der Kamerawagen (10) längs einer geometrisch vorgegebenen Kurve, insbesondere Kreisbahn verfahrbar ist.

2. Kamerawagen nach Anspruch 1,
**dadurch gekennzeichnet, daß**
die Lenkantriebe (13, 14) derart ansteuerbar sind, dass der Kamerawagen (10) je nach Bedarf mit einer
- Untersteuerung,
- Übersteuerung, oder
- neutralen Steuerung
verfahrbar ist.

3. Kamerawagen nach Anspruch 1 oder 2,
**dadurch gekennzeichnet, daß**
die Lenkantriebe (13, 14) jeweils über Ketten (17, 18 bzw. 19, 20), Zahnriemen, Zahnräder od. dgl. Kraftübertragungsmittel getrieblich mit den Lenkachsen (15 bzw. 16) der Vorder- oder Hinterräder verbunden sind.

4. Kamerawagen, insbesondere nach einem der Ansprüche 1 bis 3,
**dadurch gekennzeichnet, daß**
alle vier Räder durch entweder zwei jeweils zwischen Vorder- und Hinterrad wirksame, oder durch jedem Rad einzeln zugeordnete Lenkantriebe lenkbar sind derart, daß je nach Bedarf vier unterschiedliche Lenkmodi möglich sind, nämlich
- Lenkung nur der Vorderräder,
- Lenkung nur der Hinterräder, oder
- Lenkung aller vier Räder gemeinsam entweder
a) jeweils gleichgerichtet (crab-Modus), oder
b) Vorder- und Hinterräder entgegengerichtet (round-Modus).

5. Kamerawagen nach Anspruch 4,
**dadurch gekennzeichnet, daß**
bei nur zwei Lenkantrieben (13, 14), insbesondere jeweils einem Lenkantrieb an jeder Fahrgestellseite, zwischen diesen einerseits und den jeweils zugeordneten Vorder- und/oder Hinterrädern andererseits eine Schalteinrichtung vorgesehen ist, mittels der
a) eine individuelle Zuschaltung von Vorder- und/oder Hinterrad,
b) ein Lenkausschlag von Vorder- und Hinterrad in dieselbe Richtung, oder
c) ein Lenkausschlag von Vorder- und Hinterrad in entgegengesetzte Richtung einstellbar ist.

6. Kamerawagen nach einem der Ansprüche 1 bis 5,
**dadurch gekennzeichnet, daß**
die Lenkantriebe (13, 14) mechanisch, hydraulisch und/oder elektrisch, insbesondere auch drahtlos mit einer Lenkeinheit, die ein Lenkrad oder eine Lenkstange (21) umfaßt, verbunden sind.

7. Kamerawagen nach Anspruch 5 oder 6,
**dadurch gekennzeichnet, daß**
die Lenkeinheit ein Dreh-Potentiometer umfaßt, mittels dem mechanische Lenkausschläge der Lenkstange (21) bzw. des Lenkrades in entsprechende elektrische Signale verwandelbar sind.

8. Kamerawagen nach Anspruch 5,
**dadurch gekennzeichnet, daß**
die zwischen den Lenkantrieben (13, 14) und zugeordneten Kraftübertragungsmitteln (17, 18 bzw. 19, 20) angeordnete Schalteinrichtung einen Linear-Schaltmechanismus umfaßt.
